(19) Europäisches Patentamt
European Patent Office
Office européen des brevets

(11) Publication number : **0 557 086 A2**

(12) **EUROPEAN PATENT APPLICATION**

(21) Application number : **93301182.7**

(22) Date of filing : **18.02.93**

(51) Int. Cl.$^5$ : **C08L 71/12**, C08L 77/00

(30) Priority : **18.02.92 JP 30694/92**

(43) Date of publication of application :
**25.08.93 Bulletin 93/34**

(84) Designated Contracting States :
**BE DE FR GB IT NL**

(71) Applicant : **SUMITOMO CHEMICAL COMPANY, LIMITED**
**5-33, Kitahama 4-chome Chuo-ku**
**Osaka (JP)**

(72) Inventor : **Nagaoka, Kenji**
**832-4, Shiizu**
**Ichihara-shi, Chiba 299-01 (JP)**
Inventor : **Kitadono, Kaoru**
**1-9, Yushudainishi**
**Ichihara-shi, Chiba 299-01 (JP)**
Inventor : **Suzuki, Yasuro**
**5-9-14, Hatazawaminami**
**Kisarazu-shi, Chiba 292 (JP)**
Inventor : **Ijichi, Yasuhito**
**135, Iriyamazu**
**Ichihara-shi, Chiba 299-01 (JP)**

(74) Representative : **Cresswell, Thomas Anthony**
**J.A. Kemp & Co. 14 South Square Gray's Inn**
**London WC1R 5LX (GB)**

(54) **Flameretarding resin compositions.**

(57) Flameretarding resin compositions are prepared by blending polyphenylene ether resins, polyamide resins, and halogenated bisphenol epoxy compounds as flameretarding agents, together with compatibilizing agents, fillers, rubber materials, and antimony compounds. Blending amount of the flameretarding agent is 5-150 parts by weight per 100 parts by weight of the total amount of the both resins mentioned above. Epoxy equivalent of the halogenated bisphenol epoxy compounds is more than 5,000, preferably not less than 7,000, more preferably not less than 10,000.

EP 0 557 086 A2

The present invention relates to a flame-retarding thermoplastic resin composition containing a polyphenylene ether resin and a polyamide resin.

Polyphenylene ether resins are thermoplastic resins being superior in the characteristics such as mechanical properties, thermal stability, and dimensional stability. However, the resins are significantly inferior in impact strength and solvent resistivity, when used alone, and their high melt viscosity impedes processability. While, polyamide resins are thermoplastic resins characterized by their superior mechanical strength, solvent resistivity, processability, and others. But the resins are unsatisfactory in impact strength and thermal stability, and significantly inferior in dimensional stability because of high water absorbability, with acute decrease in mechanical strength due to water absorption.

In order to compensate such drawbacks, blending of the both resins has been proposed. However, simple blending often deteriorates excellent mechanical properties provided by the both resins. Accordingly, measures have been made in which various kinds of compatibilizing agents are added when polyphenylene ether resins and polyamide resin are blended, thereby to improve the dispersibility and to attain an improvement of the mechanical properties. Such measures have been disclosed in Japanese Patent Publication Nos. 11966/1985 and 10494/1986 and Japanese Patent Laid-Open Publication Nos. 66452/1984 and 49753/1981, among others. The polyphenylene ether/nylon resin compositions thus-obtained have been applied to the electric, electronic, and automobile industrial fields as materials which are excellent in mechanical properties, thermal resistance, solvent resistance, processability, dimensional stability, and water absorbability.

On the other hand, demand for the development of materials which possess high thermal stability together with flameretarding property, is increasing recently, particularly in the fields of electric and electronic industries. In order to meet such demand, Japanese Patent Laid-Open Publication No. 240354/1987 discloses that, among incombustibility-yielding agents, halogen flame-retarding agents, particularly brominated polystyrene, brominated polyphenylene oxide, and brominated bisphenol epoxy compounds cause no bleed. However, when the brominated bisphenol epoxy compounds are added, there are such problems caused by the flameretarding agents as gelation at granulation and molding steps and a large increase in viscosity, whereby the moldability is remarkably deteriorated.

The present invention relates to a polyphenylene ether/nylon resin composition having excellent incombustibility or flameretarding property and excellent processability. After extensive studies, the present inventors have found that blending a brominated bisphenol epoxy compound with a specific range of epoxy equivalent to a polyphenylene ether/nylon resin composition gives excellent flameretarding property and excellent processability and moldability.

The present invention is to provide a resin composition having excellent flameretarding property and excellent moldability and appearance, which is composed of

(a) 5-95% by weight of polyphenylene ethers,
(b) 95-5% by weight of polyamides,
(c) 0-30 parts by weight of compatibilizing agents against (a) and (b) per 100 parts by weight of the total of (a) and (b),
(d) 0-150 parts by weight of fillers per 100 parts by weight of the total of (a) and (b),
(e) 0-100 parts by weight of rubber materials per 100 parts by weight of the total of (a) and (b),
(f) 5-150 parts by weight of halogenated bisphenol epoxy compounds having more than 5,000 of epoxy equivalent per 100 parts by weight of the total of (a) and (b), and,
(g) 0-100 parts by weight of antimony compounds per 100 parts by weight of the total of (a) and (b).

The component (a), polyphenylene ether resins, employed in the present invention, is a polymer obtained by oxydative polymerization of one or more of phenol compounds represented by the formula:

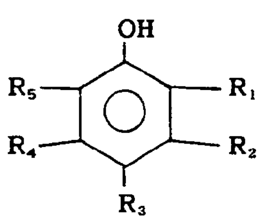

wherein $R_1$, $R_2$, $R_3$, $R_4$ and $R_5$ are selected from hydrogen and halogen atoms and hydrocarbon and substituted hydrocarbon groups, provided that one of them is necessarily a hydrogen atom, using an oxydative coupling catalyst in the presence of oxygen or oxygen-containing gas.

Specific examples of $R_1$, $R_2$, $R_3$, $R_4$ and $R_5$ in the above formula are hydrogen, chlorine, bromine, fluorine,

iodine, methyl, ethyl, n-propyl, isopropyl, prim-, sec-, and t-butyl, chloroethyl, hydroxyethyl, phenylethyl, benzyl, hydroxymethyl, carboxyethyl, methoxy-carbonylethyl, cyanoethyl, phenyl, chlorophenyl, methyl-phenyl, dimethylphenyl, ethylphenyl, allyl, etc.

Specific examples of the compounds of the above formula are phenol, o-, m-, and p-cresol, 2,6-, 2,5-, 2,4- and 3,5-dimethylphenol, 2-methyl-6-phenylphenol, 2,6-diphenylphenol, 2,6-diethylphenol, 2-methyl-6-ethylphenol, 2,3,5-, 2,3,6- and 2,4,6-trimethylphenol, 3-methyl-6-t-butylphenol, thymol, 2-methyl-6-allylphenol, etc.

Further, these compounds of the above formula may be copolymerized with phenol compounds outside of the above general formula, for example, multivalent hydroxy-aromatic compounds, such as bisphenol A, tetrabromobisphenol A, resorcin, hydroquinone and novorak resins.

Among the polymers, homopolymers of 2,6-dimethylphenol or 2,6-diphenylphenol, and copolymers from a major part of 2,6-xylenol and a minor part of 3-methyl-6-t-butylphenol or 2,3,6-trimethylphenol may be mentioned as preferred ones.

The oxydative coupling catalyst used for the oxydative polymerization is not specifically limitative. Any of catalysts having the polymerizability may be employed.

The polyphenylene ether resin according to the present invention includes not only the polyphenylene ethers as mentioned above, but their mixtures with styrene polymers and the graft polymers with other polymers.

The styrene polymers include polymers composed of one or more polymer units selected from styrene, $\alpha$ -methylstyrene, p-methylstyrene, etc. Specifically, polystyrene, rubber-reinforced polystyrene, poly- $\alpha$ -methylstyrene, poly-p-methylstyrene, styrene-acrylonitrile, etc. may be mentioned.

The blending or grafting amount of the styrene resin is desirably not more than 500 parts by weight against 100 parts by weight of the polyphenylene ether. Blending or grafting of the styrene resin of more than 500 parts by weight is not satisfactory because of significant deterioration of heat resistance of the thermoplastic resin composition.

The component (b), the polyamide resins, employed in the present invention, is one or more of polyamides selected from aliphatic polyamides, thermoplastic aromatic copolyamides, and nucleus-hydrogenated aromatic copolyamides, etc.

Specifically, the aliphatic polyamides may be prepared by linking one or more saturated aliphatic dicarboxylic acids and one or more aliphatic diamines, or by polymerization of a lactam. Nylon 6, nylon 66, nylon 64, nylon 10, nylon 11, nylon 12, nylon 66/6 copolymer, etc. are exemplified.

The thermoplastic aromatic copolyamides include copolyamides containing an aromatic component, that is, polyamides containing as the major constituent one or more aromatic amino acids or aromatic diamines and/or one or more aromatic dicarboxylic acids. Isocyanates may be employed in place of the diamines. Copolymerizing component, used if desired, is not limitative. As the thermoplastic aromatic copolyamides, a copolymerized polyamide from p-aminomethylbenzoic acid and $\varepsilon$ -caprolactam (nylon AHBA/6), a polyamide having 2,2,4-/2,2,4-trimethylhexamethylenediamineterephthalic acid salt as the main component (nylon THDT, THDT/6I), are exemplified among others.

The nucleus-hydrogenated aromatic copolyamides include copolyamides obtained by partial or whole nucleus-hydrogenation of the aromatic ring of the aromatic monomers used for preparing the aromatic copolyamides mentioned above. However, the present invention should not be limited to such polymers as mentioned.

The blending ratio of the polyphenylene ether resins and the polyamide resins in the present invention ranges from 5 to 95 parts by weight of the former resins and from 95 to 5 parts by weight of the latter resins.

The compatibilizing agent (c) in the present invention is blended so as to overcome drawbacks that affinity or compatibility of the polyphenylene ether (a) and the polyamide (b) is inherently unsatisfactory. When (a) and (b) are combinedly melt-kneaded, the PPE particles disperse only with a particle size of not less than 10 microns, with the result that only extremely inferior mechanical properties are obtained. The agent (c) comprises one or more of the compounds selected from

(A) compounds simultaneously having (i) a carbon-carbon double bond or a carbon-carbon triple bond and (ii) a carboxyl group, an acid anhydride group, an amino group, an acid amide group, an imide group, an epoxy group, a carboxylate ester group, an isocyanate group, a methylol group, an oxyazoline ring-containing group, or a hydroxyl group. Specifically, maleic acid, maleic acid anhydride, fumaric acid, unsaturated amine and glycidyl methacrylate are mentioned in Japanese Patent Laid-Open Publication Nos. 26913/1981 and 49753/1981;

(B) saturated aliphatic polycarboxylic acids and derivatives thereof represented by the formula:

$$(R_1 O)_m R(COOR_2)_n (CONR_3R_4)_s$$

wherein

R: straight chain or branched aliphatic hydrocarbons with carbon numbers of 2-20, preferably 2-10,

$R_1$: hydrogen or an alkyl, aryl, acyl, or carbonyldioxy group, preferably, hydrogen,
$R_2$: hydrogen or an alkyl or aryl group with carbon numbers of 1-20, preferably 1-10,
$R_3$ and $R_4$: hydrogen or an alkyl or aryl group with carbon numbers of 1-10, preferably, 1-6, more preferably 1-4, m = 1,
n + s : an integer not less than 2, preferably 2 or 3,
n : an integer not less than 0,
s : an integer not less than 0 and

the group ($R_1O$) is located at the α -position or β -position of the carbonyl group, and 2-6 carbons are present between the at least 2 carbonyl groups; specifically, mentioned are esters, amides, anhydrides, hydrates, and salt compounds of the saturated aliphatic polycarboxylic acids, such as citric, maleic and agaricic acids (Japanese Published Patent Gazette No. 502195/1986);

(C) compounds represented by the formula:

(I) - Z - (II)

wherein (I) means a group having at least a formula:

(X-CO)-,

wherein X is F, Cl, Br, I, OH, OR, or -O-CO-R, in which R is H or an alkyl or aryl group), (II) means at least a carboxyl ic acid, acid anhydride, acid amide, imide, carboxylate ester, amino, or hydroxyl group, and (I) and (II) groups are covalently bound through the linkage Z which is a bivalent hydrocarbon, specifically, chloroformylsuccinic acid anhydride, chloroethanoyl succinic acid anhydride, trimellitic acid anhydride chloride, trimellitic acid anhydride, acet ic anhydride, terephtharic acid chloride, etc.;

(D) silane compounds having in the molecule both of (i) at least one silicon atom bound to a carbon atom through an oxygen bridge and (ii) at least one ethylenic carboncarbon double bond or carbon-carbon triple bond and/or a functional group selected from amino and mercapto groups, said functional group not being bound to the silicon atom,

(E) oxydized polyolefin waxes, and

(F) copolymers having a unit of vinyl aromatic compound and a unit of α , β -unsaturated dicarboxylic acid or dicarboxylic acid anhydride, or copolymers having a unit of vinyl aromatic compound and a unit of α , β - unsaturated dicarboxylic acid imide compound.

The compatibilizing agents of the present invention is not necessarily limited to the compounds as mentioned above, but any of the compounds may be used so far as they improve the mutual solubility or compatibility of polyphenylene ethers and nylons. The compatibilizing agents may be used singly or in plural at the same time.

The blending amount of the compatibilizing agents is 0-30 parts by weight per 100 parts by weight of the total of the polyphenylene ether resins and the polyamide resins. An amount more than 30 parts by weight is not satisfactory, because it causes significant decrease in strength due to deterioration of thermal stability and decomposition. The preferred blending amount is from 0.05 to 25 parts by weight. Radical initiators may also be used when the compatibilizing agents are blended.

In the present invention, the fillers (d) to be blended to the resin composition are usually blended for the purpose of improving rigidity and hardness. Suitable fillers include calcium carbonate, magnesium carbonate, aluminum hydroxide, magnesium hydroxide, zinc oxide, titanium oxide, aluminum silicate, magnesium silicate, calcium silicate, silica, hydrated calcium silicate, hydrated aluminum silicate, mica, mineral fibers, zenotorite, potassium titanate whisker, magnesium oxysulfate, glass balloon, glass fibers, glass beads, carbon fibers, stainless steal fibers and other inorganic fibers, aramid fibers, carbon black, etc. Such fillers may be blended singly or as a mixture thereof. The fillers to be blended are not limited to those mentioned. Blending amount of the fillers is 0-150 parts by weight per 100 parts by weight of the total of the polyphenylene ether resins and polyamide resins. The blending amount of the fillers exceeding 150 parts by weight is not satisfactory because of the significant deterioration of impact strength of the composition and remarkable decrease of fluidity at the molding process.

The rubber materials (e) employed in the present invention include natural and synthetic polymer materials which are elastic at room temperatures. Any rubber resins used for polyphenylene ether/nylon alloy compositions to improve impact strength may be employed. Particularly preferred rubbers are ethylene-propylene rubber, ethylene-propylene-nonconjugated diene rubber, ethylene-butene rubber, polybutadiene, styrene-butadiene block copolymer rubber, styrene-butadiene copolymer rubber, partially-hydrogenated styrene-butadiene-styrene block copolymer rubber, styrene-isoprene block copolymer, partially hydrogenated styrene-isoprene block copolymer, polyurethane rubber, styrene-grafted ethylene-propylene-nonconjugated diene rubber, styrene-grafted ethylene-propylene rubber, styrene/acrylonitrile-grafted ethylene-propylene-nonconjugated diene rubber, styrene/acrylonitrile-grafted ethylene-propylene rubber and the like, or their mixtures. Modified rubbers modified with functional monomers containing other acid or epoxy may also be employed.

Blending amount of the rubber materials is 0-100 parts by weight per 100 parts by weight of the total of the polyphenylene ether resins and the polyamide resins. Amount of the rubber materials exceeding 100 parts by weight is not satisfactory because of remarkable decrease in rigidity of the resin composition.

The halogenated bisphenol epoxy compounds (f) employed in the present invention basically has the formula:

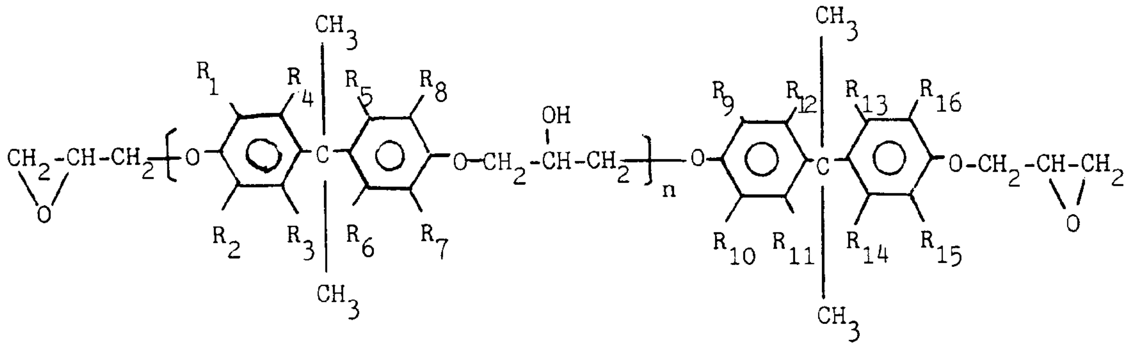

wherein $R_1$ - $R_{16}$ are, respectively, a hydrogen atom, a halogen atom, or a halogenated alkyl group, provided that at least one of them is a halogen atom, and n is an integer of 0 or not less than 1, preferably not less than 2, more preferably not less than 5, most preferably not less than 10. If desired, reactivity may be deactivated by capping the epoxy group at the terminus of the molecular chain with phenol compounds or the like. The halogen atom in the halogenated bisphenol epoxy compounds is preferably a bromine atom.

As the embodiments of the halogenated bisphenol epoxy compounds suitably used in the present invention, the following compound and the like may be mentioned.

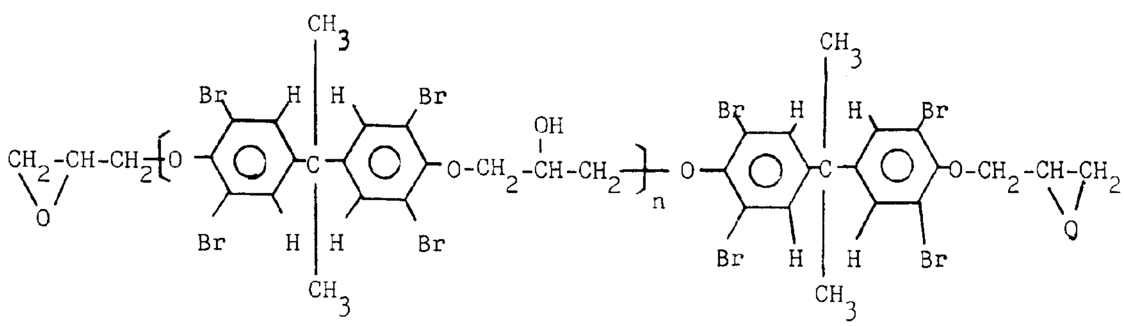

The term, epoxy equivalent, employed in the present invention means a mass of the resin containing one gram equivalent of an epoxy group in the halogenated bisphenol epoxy compounds, represented by g/eq, which is measured by a procedure set forth in JIS K7236. In general, the epoxy equivalent increases with increase of molecular weight, since the epoxy group exists at the both termini of the molecular chain. Not only by change of molecular weight, but by a reaction of the epoxy group with a functional group reactive with the epoxy group, the epoxy concentration is decreased. Epoxy equivalent may be increased without any change of the molecular weight of the epoxy compounds. If the terminal epoxy group of the epoxy compounds completely capped with other functional compounds, the epoxy equivalent becomes infinite. If the epoxy equivalent is lower than the defined amount, there are observed significant gelation and increase in melt-viscosity, as well as significant decrease in processability caused by the flameretarding agents. The epoxy equivalent to suppress decrease of processability is more than 5,000, preferably not less than 7,000, more preferably not less than 10,000, most preferably not less than 20,000.

Blending amount of the halogenated bisphenol epoxy compounds is not less than 5 and not more than 150 parts by weight per 100 parts by weight of the total of the polyphenylene ether resins and the polyamide resins. With less than 5 parts by weight of the blending amount, flameretarding property of the resin composition is unsatisfactorily improved. With the blending amount exceeding 150 parts by weight, advantage from the blending of the polyphenylene ethers and the nylons is extinguished.

The antimony compounds in the present invention are often used together with the flameretarding agents generally as an auxiliary flameretarding agent. The most preferable antimony compound is antimony trioxide.

Blending amount of the antimony compounds is 0-100 parts by weight per 100 parts by weight of the total of the polyphenylene ether resins and the polyamide resins. An amount exceeding 100 parts by weight is not satisfactory, because of significant decrease in fluidity in the molding process.

The thermoplastic resin composition may be obtained by blending the components (a)-(g) as mentioned above, followed by melt kneading. These components may be melt-kneaded in any sequence arbitrarily. Any combinations of the components may separately be kneaded and then each of the combinations are combinedly blended and kneaded. Alternatively, one or more of the components may be sequentially fed along a cylinder of an extruder having plural feeding inlets.

Any conventionally used additives, for example, flameretarding agents, plasticizers, antioxidants, weather proofing agents, etc. may further be added to the composition of the present invention. Particularly, use of materials well known as the additives for polyphenylene ethers or nylons would give more satisfactory results.

## Examples

The present invention will more fully be explained with reference to the working examples, which are, however, only illustrative and not limitative.

In each of the following Examples and Comparative Examples, mixtures of polyphenylene ethers, mutual solubility-improving agents and rubbers, if desired, with radical generators, were fed to the first feeding inlet of a twin extruder TEM 50 (made by TOSHIBA KIKAI), and melt-kneaded at a cylinder temperature of 260°C, and then the remaining components were fed to the second feeding inlet located between the first feeding inlet and the dice, and again melt-kneaded. The molten resin extruded from the dice was cooled in a water bath, and pelletized using a strand cutter. The resulting pellets were vacuum-dried at 130°C for 4 hours, and then molded to make test pieces using a SUMITOMO NESTARL injection machine SYCAP 110/50 made by SUMITOMO JUKIKAI under conditions of a cylinder temperature of 290°C, an injection pressure of 1200 kg/cm$^2$, and a mold temperature of 80°C.

Test pieces thus molded were tested according to the following procedures with the following data.

[UL 94 flameretarding test]

Test pieces of 1.6 mm t for UL flameretarding testing were molded using an injection machine, and flameretarding test was conducted according to UL 94 flameretarding test method to estimate the flameretarding rankings.

[Melt index, MI]

The pellets of each resin composition were vacuum-dried at 140°C for 4 hours, and the melt indices at 280°C under 10 kg load were measured.

[Izod impact test]

Test pieces of 3.2 mm t for the Izod testing were molded using an injection machine. After being notched, the impact test was conducted according to ASTM D256.

[Appearance of the molded products]

The skin was observed by the eye at the product surface of the 3.2 mm t Izod testing pieces obtained by the extrusion molding.

In order to obtain the compositions of the Examples and Comparative Examples, the following materials were prepared.

[Polyphenylene ether, PPE]

Polyphenylene ether to be used in the Examples was obtained by a homopolymerization of 2,6-dimethylphenol, which had a logarithmic viscosity at 30°C in chloroform (concentration: 0.5 g/dl) of 0.46.

[Polyamide]

Nylon 6 having a number average molecular weight of 17,500.

[Rubber material]

Styrene-butadiene-styrene block copolymer, Califlex TR 1101, produced by SHELL CHEMICAL CO., LTD.

[Compatibilizing agent]

Maleic acid anhydride.

[Radical generator]

Dicumyl peroxide.

[Inorganic filler, GF]

A glass fiber: RES-TR64 produced by NIHON GARASU SENI KABUSHIKI KAISHA.

[Flameretarding agent]

A brominated bisphenol epoxy compound represented by the following formula:

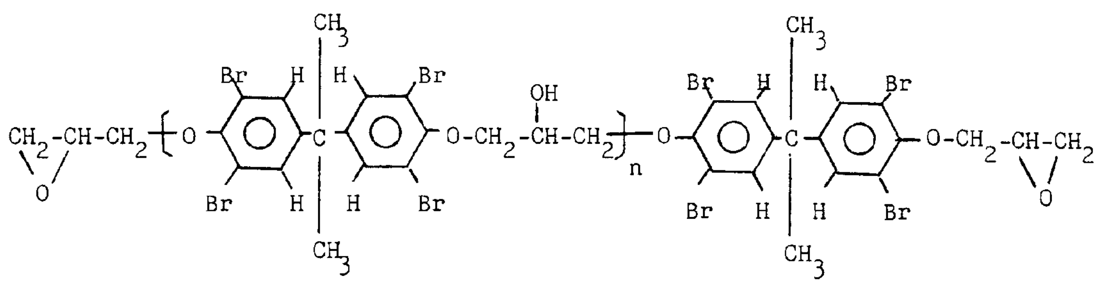

| | |
|---|---|
| Flameretarding agent-1: | a compound of the above formula having an epoxy equivalent of 5,000 (terminal epoxy untreated). |
| Flameretarding agent-2: | a compound of the above formula having an epoxy equivalent of 10,000 (terminal epoxy untreated). |
| Flameretarding agent-3: | a compound of the above formula having an epoxy equivalent of 20,000 (terminal epoxy untreated). |
| Flameretarding agent-4: | a compound obtained by capping a part of the terminal epoxy group of the flameretarding agent-2 with 2,4,6-tribromophenol to increase the epoxy equivalent to 17,600. |
| Flameretarding agent-5: | a compound of the above formula having an epoxy equivalent of 800 (terminal epoxy untreated). |

Examples 1-3 and Comparative Examples 1-3

Compositions and the test results for the performances are shown in the Tables 1 and 2.

Table 1

| | Example 1 | Example 2 | Example 3 |
|---|---|---|---|
| PPE | 50 | 50 | 50 |
| Nylon | 50 | 50 | 50 |
| Compatibilizing agent | 0.5 | 0.5 | 0.5 |
| Antimony trioxide | 8 | 8 | 8 |
| Flameretarding agent-2 | 20 | 0 | 0 |
| Flameretarding Agent-3 | 0 | 20 | 0 |
| Flameretarding agent-4 | 0 | 0 | 20 |
| MI | 21 | 28 | 33 |
| Appearance | good | good | good |
| Izod impact strength | 4 | 4 | 4 |
| Flameretarding ranking | VO | VO | VO |

Table 2

| | Comparative Example 1 | Comparative Example 2 | Comparative Example 3 |
|---|---|---|---|
| PPE | 50 | 50 | 50 |
| Nylon | 50 | 50 | 50 |
| Compatibilizing agent | 0.5 | 0.5 | 0.5 |
| Antimony trioxide | 0 | 8 | 8 |
| Flameretarding agent-1 | 0 | 0 | 20 |
| Flameretarding agent-5 | 0 | 20 | 0 |
| MI | 70 | 2 | 10 |
| Appearance | good | rough | good |
| Izod impact strength | 5 | 2 | 3 |
| Flameretarding ranking | HB | VO | VO |

Example 4 and Comparative Example 4

A sample for rubber reinforcement was prepared by granulation as shown in the Table 3, with the results on the performances of the sample.

Table 3

| | Example 4 | Comparative Example 4 |
|---|---|---|
| PPE | 40 | 40 |
| Nylon | 60 | 60 |
| Compatibilizing agent | 0.5 | 0.5 |
| Radical generator | 0.001 | 0.001 |
| Rubber | 14 | 14 |
| Antimony trioxide | 8 | 8 |
| Flameretarding agent-3 | 20 | 0 |
| Flameretarding agent-5 | 0 | 20 |
| MI | 42 | 5 |
| Appearance | good | rough |
| Izod impact strength | 11 | 3 |
| Flameretarding ranking | VO | VO |

Example 5 and Comparative Example 5

A sample for glass fiber reinforcement was made by granulation as shown in the Table 4, with the results on the performances of the sample.

Table 4

| | Example 5 | Comparative Example 5 |
|---|---|---|
| PPE | 40 | 40 |
| Nylon | 60 | 60 |
| Compatibilizing agent | 0.5 | 0.5 |
| GF | 14 | 14 |
| Antimony trioxide | 8 | 8 |
| Flameretarding agent-3 | 20 | 0 |
| Flameretarding agent-5 | 0 | 20 |
| MI | 17 | 2 |
| Appearance | good | rough |
| Izod impact strength | 5 | 4 |
| Flameretarding ranking | VO | VO |

As obvious from the Examples and Comparative Examples, the present flameretarding resin compositions prepared by blending polyphenylene ethers/nylon resins composition and halogenated bisphenol resins have well-balanced characteristics of less decreased fluidity at the processing step and good flameretarding property, owing to the use of the halogenated bisphenol resins having a specified scope of epoxy equivalent.

## Claims

1. A flameretarding resin composition composed of
   (a) 5 to 95% by weight of polyphenylene ethers,
   (b) 95 to 5% by weight of polyamides,
   (c) 0 to 30 parts by weight of compatibilizing agents per 100 parts by weight of the total of (a) and (b),
   (d) 0 to 150 parts by weight of fillers per 100 parts by weight of the total of (a) and (b),
   (e) 0 to 100 parts by weight of rubber materials per 100 parts by weight of the total of (a) and (b)
   (f) 5 to 150 parts by weight of halogenated bisphenol epoxy compounds having epoxy equivalents more than 5,000 per 100 parts by weight of the total of (a) and (b), and,
   (g) 0 to 100 parts by weight of antimony compounds per 100 parts by weight of the total of (a) and (b).

2. A resin composition according to claim 1 wherein the halogenated bisphenol epoxy resins of component (f), have epoxy equivalents of not less than 7,000.

3. A resin composition according to claim 2 wherein the halogenated bisphenol epoxy resins of the component (f), have epoxy equivalents of not less than 10,000.

4. A shaped article formed of a resin composition according to any of claims 1 to 3.

5. Use of a resin composition according to any one of claims 1 to 3 in the production of a shaped article.